Europäisches Patentamt

European Patent Office

Office européen des brevets

(19)

(11) Veröffentlichungsnummer : **0 208 927**
**B1**

(12) **EUROPÄISCHE PATENTSCHRIFT**

(45) Veröffentlichungstag der Patentschrift :
02.11.89

(51) Int. Cl.⁴ : **A 47 J 43/12**

(21) Anmeldenummer : 86108146.1

(22) Anmeldetag : 14.06.86

(54) **Gerätkopf für eine Maschine zum Aufschlagen schaumiger Massen, wie z.B. Schlagsahne.**

(30) Priorität : 20.06.85 DE 3521982

(43) Veröffentlichungstag der Anmeldung :
21.01.87 Patentblatt 87/04

(45) Bekanntmachung des Hinweises auf die Patenterteilung : 02.11.89 Patentblatt 89/44

(84) Benannte Vertragsstaaten :
AT CH DE IT LI NL

(56) Entgegenhaltungen :
US--A-- 2 302 705
US--A-- 3 758 080

(73) Patentinhaber : **Kümmerling, Josef**
**Schuchsfeldstrasse. 17**
**D-7580 Bühl (DE)**

(72) Erfinder : **Kümmerling, Josef**
**Schuchsfeldstrasse. 17**
**D-7580 Bühl (DE)**

(74) Vertreter : **Zipse & Habersack**
**Lessingstrasse 12**
**D-7570 Baden-Baden (DE)**

EP 0 208 927 B1

## Beschreibung

Die Erfindung betrifft einem dem Oberbegriff des Patentanspruches 1 entsprechenden Gerätekopf für eine Maschine zum Aufschlagen schaumiger Massen, wie z. B. Schlagsahne.

Derartige Maschinen bestehen im allgemeinen aus einem Gehäuse mit einem gekühlten Raum zur Aufnahme eines Sahnekessels, in welchen ein mit einem Gerätekopf verbundenes Steigrohr für die Sahne reicht. Der Gerätekopf sitzt auf einer von einem Motor angetriebenen Pumpe, die den Flüssigrahm und die Luft zugleich ansaugt und in eine beispielsweise aus mehreren ineinandergesteckten Widerstandsrohren bestehende Vorrichtung zum Aufschlagen der schaumigen Masse führt.

In dem aus einem Metall- oder Kunststoffblock bestehenden Gerätekopf sind Kanäle und Kammern für die Luftzufuhr und die Sahnezuführung vorgesehen, wobei der Luftansaugkanal mit einem federbelasteten Luftansaugventil abgeschlossen ist. Der Luftkanal ist mit dem Sahnekanal verbunden, und die Kanäle führen zu einer Auslaßkammer für das Luft-Sahne-Gemisch, welche mit der Saugseite einer Pumpe verbunden ist und über die Druckseite einer Pumpe in die Vorrichtung zum Aufschlagen der schaumigen Masse gedrückt wird.

Eine weitere derartige Maschine ist aus der US-A-3758080 bekannt.

Bei den bisher bekannten Maschinen zum Aufschlagen schaumiger Massen besteht der Nachteil, daß nach mehrmaligem Benutzen flüssige Sahne in den Luftansaugkanal und ggf. auch in das Luftansaugventil eindringt. Dadurch wird die Luftzufuhr stark beeinträchtigt oder ggf. unterbunden, so daß beim Betätigen der Maschine statt Schlagsahne nur halbausgeschlagene Sahne in weicher bzw. flüssiger Form aus dem Auslaufrohr austritt.

Um diesem Umstand abzuhelfen, mußte während der Benutzung der Maschine mehrere Male das Luftansaugventil abgeschraubt und der Luftansaugkanal und das Ventil gereinigt werden. Diese Arbeiten sind aber in einem Geschäftsbetrieb, beispielsweise in einem Café, einer Eisdiele oder einem Restaurantbetrieb, nur schwer während der Hauptgeschäftszeiten durchzuführen.

Der vorliegenden Erfindung liegt die Aufgabe zugrunde, einen Gerätekopf für die vorgenannten Maschinen zu schaffen, der die oben beschriebenen Nachteile nicht aufweist und der dadurch ständig funktionsbereit ist und dadurch immer eine gleichbleibende Sahnequalität produziert.

Zur Lösung der gestellten Aufgabe wird ein Gerätekopf für Maschinen zum Aufschlagen schaumiger Massen, wie z. B. Schlagsahne, bestehend aus in einem Metall- oder Kunststoffblock angeordneten Kanälen und Kammern für die Luftzufuhr und die Sahnezuführung, die zu einer Saugpumpe für die Luft und Sahne führen und mit einer Einrichtung zum Aufschlagen der schaumigen Masse verbunden sind, wobei an der Luftansaugkammer ein Ventil angeordnet ist und wobei die mit dem sahneführenden Kanal verbundene Luftansaugkammer gegenüber dem sahneführenden Kanal durch ein federbelastetes Ventil abgedichtet ist, welcher dadurch gekennzeichnet ist, daß das die Luftansaugkammer gegenüber dem sahneführenden Kanal abdichtende Ventil als konische Stahlspitze oder -kugel ausgebildet und mit seiner den Block und den sahneführenden Kanal horizontal durchquerenden Feder auswechselbar auf dem Ansatz eines von außen horizontal in den Block einschraubbaren Bolzens aufgesetzt ist und daß das an der Luftansaugkammer angeordnete Ventil federbelastet ist.

Mit dem Gerätekopf gemäß der Erfindung wird der wesentliche Vorteil erreicht, daß in die Luftansaugkammer bzw. den Luftansaugkanal und das Luftansaugventil keine Sahne eindringen kann, so daß keine Verkrustungen entstehen, die ein genau dosiertes Luftansaugen, das zum Aufschlagen von voluminöser und gleichzeitig standfester Schlagsahne erforderlich ist, verhindern.

Durch den einschraubbaren Bolzen kann auch die Federspannung ggf. auf die Beschaffenheit der flüssigen Masse genau eingestellt werden, so daß die angesaugte Luft die federbelastete Abdichtung, wie z. B. konische Stahlspitze oder -Kugel, öffnet und, wenn keine Ansaugung erfolgt, die Öffnung sofort schließt, so daß, wie oben dargelegt, keine Sahne eindringen kann und dadurch Verkrustungen vermieden werden.

Anhand der Zeichnung soll am Beispiel einer bevorzugten Ausführungsform der Gerätekopf gemäß der Erfindung näher erläutert werden.

In der Zeichnung zeigt

Fig. 1 eine auseinandergezogene Darstellung einer Maschine zum Aufschlagen schaumiger Massen mit dem Gerätekopf gemäß der Erfindung.

Fig. 2 zeigt eine vergrößerte Darstellung des Gerätekopfes gemäß der Erfindung im Schnitt.

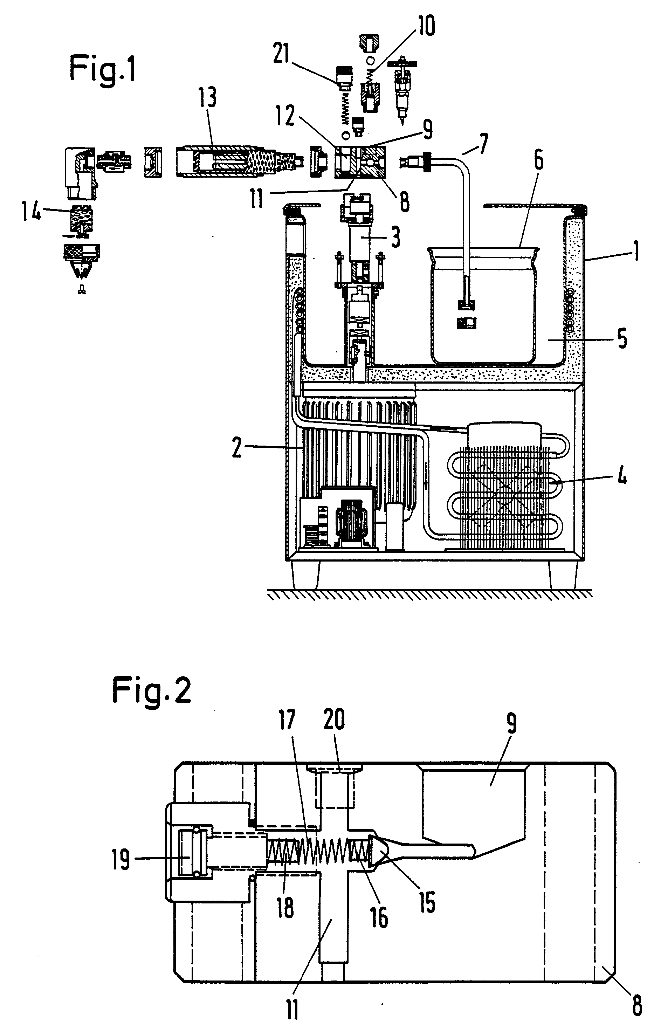

Wie sich aus Fig. 1 ergibt, ist in einem Maschinengehäuse 1 ein Motor 2 für eine Pumpe 3 untergebracht. Neben dem Motor befindet sich eine Kühlmaschine 4, die zur Kühlung eines in einem Raum 5 untergebrachten Sahnekessels 6 dient. Der Sahnekessel 6 steht über eine Steigrohrleitung 7 mit dem Gerätekopf 8 in Verbindung. In dem Gerätekopf 8 sind Kanäle und Kammern für die Luft- und Sahnezufuhr vorgesehen. Der Gerätekopf 8 ist auf die Pumpe 3 mittels einer Dichtung aufgesetzt. Der Luftansaugkanal 9, der durch ein Luftansaugventil 10 abgeschlossen ist, ist mit dem Sahnekanal 11 verbunden, so daß mittels der Pumpe 3 die Luft und die Sahne gleichzeitig angesaugt werden.

Die Austrittskammer 12 ist mit einer Vorrichtung 13 zum Aufschlagen der schaumigen Masse verbunden, die im allgemeinen aus mehreren ineinandergesteckten Widerstandsrohren besteht. Über ein mit der Vorrichtung 13 verbundenes, senkrechtes Auslaufrohr 14 kann dann die aufgeschlagene Masse entnommen werden.

Wie sich aus Fig. 2 ergibt, ist in dem Gerätekopf 8 mit entsprechendem Paßsitz eine federbelastete Abdichtung 15, wie z. B. konische Stahlspitze, Kugel, Metall- oder Kunststoffplättchen, eingesetzt, die in den Luftansaugkanal 9 reicht.

Die federbelastete Abdichtung 15, die auch eine Kugel mit entsprechendem Paßsitz sein kann, weist an der Hinterseite einen Ansatz 16 auf, auf welchem eine Feder 17 aufgesetzt ist. Die Feder 17 ist am anderen Ende auf dem Ansatz 18 aufgesetzt, der zu einem einschraubbaren Bolzen 19 gehört. Das Sahnerohr 11 kann an der Oberseite bei 20 durch eine Sahneansaugverschraubung mit Dichtungsring 21 verschlossen werden.

Im normalen Zustand verschließt die federbelastete Abdichtung 15, wie z. B. konische Stahlspitze, Kugel, Metall- oder Kunststoffplättchen, den Zugang zum Luftkanal 9, so daß vom Sahnekanal 11 keine Sahne in den Luftansaugkanal 9 gelangen kann. Wenn durch Entnahme von Schlagsahne die Maschine in Betrieb genommen wird, wird durch den Luftsog die federbelastete Abdichtung 15, wie z. B. konische Stahlspitze, Kugel, Metall - oder Kunststoffplättchen, gegen die Feder 17 gedrückt, wodurch Luft in den Sahnekanal 11 eintreten und sich mit der Sahne vermischen kann.

Beim Unterbrechen der Sahneentnahme drückt die Feder 17 die federbelastete Abdichtung 15, wie z. B. konische Stahlspitze, Kugel, Metall- oder Kunststoffplättchen, wieder in ihren Paßsitz, so daß die Öffnung zur Luftansaugkammer 9 verschlossen wird. Dadurch wird gewährleistet, daß in den Luftansaugkanal bzw. die entsprechenden Kammern keine Sahne eindringen und Verkrustungen verursachen kann.

## Patentanspruch

Gerätekopf für Maschinen zum Aufschlagen schaumiger Massen, wie z. B. Schlagsahne, bestehend aus in einem Metall- oder Kunststoffblock (8) angeordneten Kanälen (11) und Kammern (9) für die Luftzufuhr (9) und die Sahnezuführung (11), die zu einer Saugpumpe (3) für die Luft und Sahne führen und mit einer Einrichtung (13) zum Aufschlagen der schaumigen Masse verbunden sind, wobei an der Luftansaugkammer (9) ein Ventil (10) angeordnet ist und wobei die mit dem sahneführenden Kanal verbundene Luftansaugkammer (9) gegenüber dem sahneführenden Kanal (11) durch ein federbelastetes Ventil (15) abgedichtet ist, dadurch gekennzeichnet, daß das die Luftansaugkammer gegenüber dem sahneführenden Kanal abdichtende Ventil (15) als konische Stahlspitze oder -kugel ausgebildet und mit seiner den Block (8) und den sahneführenden Kanal (11) horizontal durchquerenden Feder auswechselbar auf dem Ansatz (18) eines von außen horizontal in den Block (8) einschraubbaren Bolzens (19) aufgesetzt ist und daß das an der Luftansaugkammer (9) angeordnete Ventil (10) federbelastet ist.

## Claim

Appliance head for machines for whipping foamy products, such as whipped cream for example, consisting of channels (11) and chambers (9) for the delivery of air (9) and cream (11) arranged in a metal or plastics block (8), which channels and chambers lead to a suction pump (3) for the air and cream and are connected to a device (13) for whipping the foamy product, wherein a valve (10) is arranged at the air suction chamber (9) and wherein the air suction chamber (9) connected to the cream-carrying channel is sealed relative to the cream-carrying channel (11) by a spring-loaded valve (15), characterised in that the valve (15) sealing the air suction chamber relative to the cream-carrying channel is formed as a conical steel point or ball and, with its spring passing horizontally through the block (8) and the cream-carrying channel (11), rests detachably on the end (18) of a bolt (19) screwed horizontally into the block (8) from outside, and that the valve (10) arranged at the air suction chamber (9) is spring-loaded.

## Revendication

Tête d'appareil pour des machines à battre des masses moussantes, comme par exemple de la crème fouettée, constituée par des canaux (11) et des chambres (9) pour l'arrivée d'air (9) et l'amenée de crème (11) qui sont disposés dans un bloc (8) en métal ou en matière plastique, qui conduisent à une pompe (3) d'aspiration de l'air et de la crème, et qui sont reliés à un dispositif (13) pour battre la masse mousseuse, un clapet (10) étant monté sur la chambre d'aspiration d'air (9), et la chambre d'aspiration d'air (9) reliée au canal de passage de la crème étant rendue étanche par rapport au canal (11) de passage de la crème grâce à un clapet (15) poussé par un ressort, caractérisée par le fait que le clapet (15) qui rend étanche la chambre d'aspiration d'air par rapport au canal de passage de la crème est réalisé sous la forme d'un pointeau ou d'une bille en acier, et qu'avec son ressort qui traverse horizontalement le bloc (8) et le canal (11) de passage de la crème, il est monté de manière interchangeable sur l'épaulement (18) d'un boulon (19) qui peut être vissé horizontalement dans le bloc (8) depuis l'extérieur, et par le fait que le clapet (10) monté sur la chambre d'aspiration d'air (9) est poussé par un ressort.

# Fig.1

# Fig.2

1